# EUROPÄISCHE PATENTSCHRIFT

(11) **EP 4 355 627 B1**
(45) Veröffentlichungstag und Bekanntmachung des Hinweises auf die Patenterteilung: **02.04.2025**
(21) Anmeldenummer: 22726034.6
(22) Anmeldetag: 27.04.2022
(51) Int. Cl.: B60W 30/10, B60W 50/023, B60W 50/029, B60W 60/00, B60W 30/00, B60W 40/00, B60W 30/12, B60W 50/00

(54) **VERFAHREN ZUM BETRIEB EINES FAHRZEUGES IN EINEM AUTOMATISIERTEN FAHRBETRIEB**
METHOD FOR OPERATING A VEHICLE IN AN AUTOMATED DRIVE OPERATION
PROCÉDÉ POUR FAIRE FONCTIONNER UN VÉHICULE DANS UN FONCTIONNEMENT DE CONDUITE AUTOMATISÉE

(30) Priorität: 15.06.2021 DE 102021003069
(43) Veröffentlichungstag der Anmeldung: 24.04.2024
(73) Patentinhaber: Mercedes-Benz Group AG, 70372 Stuttgart (DE)
(72) Erfinder: OLTMANN, Volker, 75365 Calw (DE); TOCHTERMANN, Nikolai, 71229 Leonberg (DE)
(74) Vertreter: Novagraaf Group
(86) Internationale Anmeldenummer: PCT/EP2022/061194
(87) Internationale Veröffentlichungsnummer: WO 2022/263044

(56) Entgegenhaltungen:
- EP-A2- 2 390 862
- DE-A1- 102013 003 216
- DE-A1- 102013 213 171
- DE-A1- 102015 003 124
- DE-A1- 102017 011 808
- DE-A1- 102019 102 830

## Beschreibung

Die Erfindung betrifft ein Verfahren zum Betrieb eines Fahrzeuges in einem automatisierten Fahrbetrieb gemäß dem Oberbegriff des Patentanspruchs 1.

Aus der die DE 10 2017 011 808 A1 sind ein Verfahren zur Regelung der Bewegung eines Fahrzeuges in einem automatisierten Fahrbetrieb und eine Vorrichtung zur Durchführung des Verfahrens bekannt. Das Verfahren sieht vor, dass der automatisierte Fahrbetrieb von einem regulären Betriebsmodus, in dem das Fahrzeug automatisiert zu einer vorgegebenen Zielposition geführt wird, zu einem Notbetriebsmodus, in dem das Fahrzeug automatisiert zu einer Nothalteposition geführt wird, umschaltbar ist. Die Regelung im regulären Betriebsmodus wird mittels eines Hauptsteuergerätes und im Notbetriebsmodus mittels eines Nebensteuergerätes durchgeführt. Dabei wird der automatisierte Fahrbetrieb vom regulären Betriebsmodus zum Notbetriebsmodus umgeschaltet, wenn im regulären Betriebsmodus eine Funktionsbeeinträchtigung des Hauptsteuergerätes festgestellt wird. Die Regelung im regulären Betriebsmodus wird basierend auf einer zur Zielposition führenden regulären Solltrajektorie durchgeführt, welche vom Hauptsteuergerät im regulären Betriebsmodus fortlaufend ermittelt wird. Die Regelung im Notbetriebsmodus wird basierend auf einer im Nebensteuergerät gespeicherten und zur Nothalteposition führenden Notbetriebssolltrajektorie durchgeführt, welche vom Hauptsteuergerät im regulären Betriebsmodus vor der Umschaltung des Betriebsmodus in den Notbetriebsmodus ermittelt worden ist und dem Nebensteuergerät zur Speicherung zugeführt worden ist. Im regulären Betriebsmodus wird neben der Notbetriebssolltrajektorie auch ein zur Notbetriebssolltrajektorie zugehöriger Spurverlauf einer vom Fahrzeug befahrenen Fahrspur ermittelt und dem Nebensteuergerät zur Speicherung zugeführt. Zudem ist vorgesehen, dass die Notbetriebssolltrajektorie und der zugehörige Spurverlauf in einem fahrzeugfesten Koordinatensystem des Hautsteuergerätes ermittelt werden. Im Notbetriebsmodus wird der Spurverlauf der vom Fahrzeug befahrenen Fahrspur in einem fahrzeugfesten Koordinatensystem des Nebensteuergerätes ermittelt und im Notbetriebsmodus wird basierend auf dem im Nebensteuergerät gespeicherten Spurverlauf der Fahrspur und dem vom Nebensteuergerät ermittelten Spurverlauf der Fahrspur eine Abweichung zwischen den Koordinatensystemen des Hauptsteuergerätes und des Nebensteuergerätes kompensiert und somit eine Korrektur der gespeicherten Notbetriebssolltrajektorie vorgenommen.

Der Erfindung liegt die Aufgabe zugrunde, ein Verfahren zum Betrieb eines Fahrzeuges im automatisierten Fahrbetrieb anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zum Betrieb eines Fahrzeuges in einem automatisierten, insbesondere hochautomatisierten oder fahrerlosen Fahrbetrieb sieht vor, dass das Fahrzeug in einem regulären Betriebsmodus des automatisierten Fahrbetriebs mittels eines Hauptsteuergeräts automatisiert zu einer Zielposition geführt wird und in einem Notbetriebsmodus des automatisierten Fahrbetriebs mittels eines Nebensteuergeräts automatisiert entlang einer Notbetriebssolltrajektorie in eine sichere Halteposition geführt wird, wobei die Notbetriebssolltrajektorie im regulären Betriebsmodus mittels des Hauptsteuergeräts fortlaufend ermittelt wird und zusammen mit einem anhand von Spurmarkierungen fortlaufend erfassten vorausliegenden Spurverlauf einer Fahrspur des Fahrzeugs im Nebensteuergerät gespeichert wird und dass im Notbetriebsmodus eine Korrektur der gespeicherten Notbetriebssolltrajektorie basierend auf dem gespeicherten Spurverlauf und einem im Notbetriebsmodus fortlaufend ermittelten Spurverlauf der Fahrspur des Fahrzeugs vorgenommen wird. Erfindungsgemäß ist vorgesehen, dass im Notbetriebsmodus eine Abweichung zwischen dem gespeicherten Spurverlauf und dem im Notbetriebsmodus fortlaufend ermittelten Spurverlauf ermittelt wird, dass in Abhängigkeit der ermittelten Abweichung bewertet wird, ob der fortlaufend ermittelte Spurverlauf plausibel ist, und dass die Korrektur der gespeicherten Notbetriebssolltrajektorie basierend auf dem gespeicherten Spurverlauf und dem fortlaufend ermittelten Spurverlauf nur dann vorgenommen wird, wenn der fortlaufend ermittelte Spurverlauf als plausibel bewertet worden ist. Der im Notbetriebsmodus fortlaufend ermittelte Spurverlauf entspricht dabei dem im Notbetriebsmodus jeweils aktuell ermittelten Spurverlauf.

Im Notbetriebsmodus wird somit in Abhängigkeit der ermittelten Abweichung entschieden, ob der fortlaufend ermittelte Spurverlauf, also der aktuell ermittelte Spurverlauf bei der Führung des Fahrzeugs in die sichere Halteposition berücksichtigt werden soll oder unberücksichtigt bleiben soll bzw. verworfen werden soll.

Durch Anwendung des Verfahrens, insbesondere durch die Korrektur der gespeicherten Notfallsolltrajektorie basierend auf der Plausibilisierung des fortlaufend ermittelten Spurverlaufs, kann das Risiko verringert werden, dass bei einer falsch erfassten Fahrspur des Fahrzeuges diese bei der Fahrzeugführung genutzt wird. Bei nicht plausiblem Spurverlauf kann dann der vergleichsweise verlässlichen Notbetriebssolltrajektorie mittels sogenannter Koppelnavigationsdaten gefolgt werden.

Eine Ausführung des Verfahrens sieht vor, dass im Notbetriebsmodus der fortlaufend ermittelte Spurverlauf als plausibel bewertet wird, wenn die ermittelte Abweichung einen vorgegebenen Wert unterschreitet. Andernfalls, wenn der fortlaufend ermittelte Spurverlauf den vorgegebenen Wert überschreitet, wird der Spurverlauf als unplausibel bewertet und verworfen und das Fahrzeug wird dann gemäß der gespeicherten Notfallsolltrajektorie in die sichere Halteposition geführt.

Insbesondere findet das Verfahren Anwendung, wenn eine Kameraspurinformation in vergleichsweise komplexen Szenarien falsche Ergebnisse liefert, die anhand des Verfahrens identifiziert und somit umgangen werden können.

Weiterhin kann mittels des Verfahrens das Risiko eines Spurverlassens des Fahrzeuges und eines damit erhöhten Unfallrisikos nicht nur für das Fahrzeug, insbesondere aufgrund falsch erfasster Spurmarkierungen wesentlich verringert werden.

Darüber hinaus kann das Verfahren dazu verwendet werden, Umgebungserfassungsdaten einer Umgebungssensorik in einem Hauptsteuergerät zum automatisierten Fahrbetrieb des Fahrzeuges zu plausibilisieren.

In einer Weiterbildung des Verfahrens wird die Abweichung zwischen dem gespeicherten Spurverlauf und dem fortlaufend ermittelten Spurverlauf ermittelt, indem ermittelt wird, welche Abweichung sich zwischen der dem gespeicherten Spurverlauf und dem mit den fortlaufend ermittelten Spurverlauf in einem vorgegebenen Abstand vor dem Fahrzeug ergibt. Dadurch ist es möglich, auf einfache Weise ein Maß für die Abweichung zu ermitteln.

Der vorgegebene Abstand wird in einer möglichen Weiterbildung geschwindigkeitsabhängig vorgegeben, wobei der Abstand bei höherer Geschwindigkeit größer gewählt wird als bei einer vergleichsweise geringen Fahrgeschwindigkeit. Somit ist es möglich, auf gegebenenfalls fehlerhaft erfasste Spurmarkierungen geschwindigkeitsangepasst zu reagieren.

Eine mögliche Ausführung des Verfahrens sieht vor, dass die Korrektur der gespeicherten Notbetriebssolltrajektorie durch einen Abgleich des gespeicherten Spurverlaufs mit dem fortlaufend ermittelten Spurverlauf erfolgt.

Vorzugsweise wird dabei zum Abgleichen des gespeicherten Spurverlaufs mit dem fortlaufend ermittelten Spurverlauf ermittelt, welche Koordinatentransformation auf den gespeicherten Spurverlauf anzuwenden ist, um den gespeicherten Spurverlauf an den fortlaufend ermittelten Spurverlauf anzupassen. Es wird also ermittelt, inwieweit der gespeicherte Spurverlauf, und mithin sein Koordinatensystem, verdreht und verschoben werden muss, um eine Übereinstimmung zwischen dem gespeicherte Spurverlauf und dem fortlaufend ermittelten Spurverlauf zu erhalten.

Zur Korrektur der gespeicherten Notfallsolltrajektorie wird die ermittelte Koordinatentransformation auf die gespeicherte Notfallsolltrajektorie angewendet. Das Ergebnis dieser Koordinatentransformation ist die korrigierte Notfallsolltrajektorie.

In einer weiteren möglichen Ausbildung des Verfahrens wird das Fahrzeug im Notbetriebsmodus mittels Koppelnavigation lokalisiert, wenn Spurmarkierungen, die zur Ermittlung des Spurverlauf benötigt werden, nicht erfasst werden, oder wenn der Spurverlauf erfasst wird aber als nicht plausibel bewertet wird. Insbesondere erfolgt die Lokalisierung anhand von Koppelnavigationsdaten, welche zum Betrieb des Fahrzeuges im Notbetriebsmodus verwendet werden, so dass das Fahrzeug in die sichere Halteposition überführt werden kann.

In einer weiteren möglichen Ausbildung werden die Spurmarkierungen anhand von Bilddaten, insbesondere einer Fahrzeugkamera und/oder einer anderen geeigneten Vorrichtung, fortlaufend ermittelt, um das Fahrzeug im aktivierten Notbetriebsmodus in die sichere Halteposition zu überführen.

Ausführungsbeispiele der Erfindung werden im Folgenden anhand einer Zeichnung näher erläutert.

Dabei zeigt die:

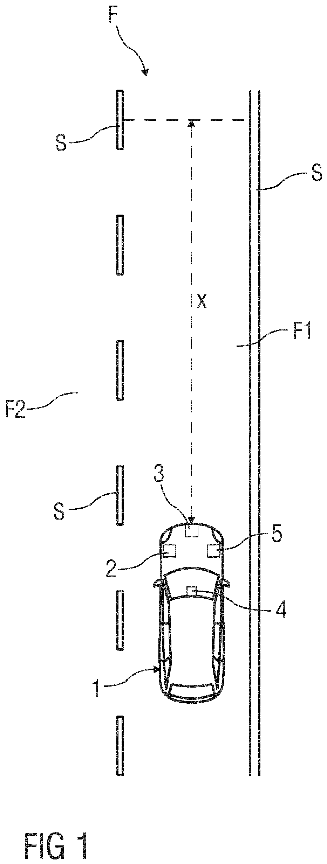

- Fig. 1: schematisch ein auf einer Fahrspur eines Fahrbahnabschnittes im automatisierten Fahrbetrieb fahrendes Fahrzeug.

Die einzige Figur zeigt einen Fahrbahnabschnitt F mit zwei gegenläufigen Fahrspuren F1, F2 und ein auf einer rechten Fahrspur F1 im automatisierten Fahrbetrieb fahrendes Fahrzeug 1.

Im in einem regulären Betriebsmodus des automatisierten, insbesondere hochautomatisierten Fahrbetriebs wird das Fahrzeug 1 mittels eines Hauptsteuergerätes 2 satellitengestützt und landmarkengestützt lokalisiert. Das Hauptsteuergerät 2 ermittelt in regelmäßigen zeitlichen Abständen eine Solltrajektorie, die eine Fahrvorgabe darstellt, in einem fahrzeugfesten Koordinatensystem und führt eine Trajektorienregelung entsprechend der ermittelten Solltrajektorie durch. Die Solltrajektorie umfasst dabei eine Beschreibung eines Pfades, entlang dem das Fahrzeug 1 im regulären Betriebsmodus bewegt werden soll. Zudem umfasst die Solltrajektorie eine Beschreibung eines Verlaufes einer Geschwindigkeit, mit welcher sich das Fahrzeug 1 entlang des Pfades bewegen soll.

Das Fahrzeug 1 umfasst eine Umgebungssensorik 3, die eine Fahrzeugkamera 4 sowie nicht näher dargestellte lidarbasierte, radarbasierte und/oder ultraschallbasierte Erfassungseinheiten aufweist. Anhand erfasster Bilddaten der Fahrzeugkamera 4 sowie anhand erfasster Signale der Erfassungseinheiten werden eine Umgebung des Fahrzeuges 1 und sich in dieser befindende Objekte detektiert.

Anhand der erfassten Bilddaten und der erfassten Signale der Umgebungssensorik 3 wird also eine Umgebungssituation detektiert, einschließlich eines Spurverlaufs der Fahrspur F1 des Fahrzeuges 1, also der Spurverlauf der rechten Fahrspur F1. Der Spurverlauf wird dabei durch Erfassung von Spurmarkierungen S, die die Fahrspur F1 begrenzen ermittelt.

Die Solltrajektorie, entlang der sich das Fahrzeug 1 im regulären Betriebsmodus des automatisierten Fahrbetriebes bewegt, wird anhand der erfassten Umgebungssituation unter Berücksichtigung des erfassten Spurverlaufs und unter Berücksichtigung von der anhand einer digitalen Karte ermittelten Spurinformationen, ermittelt.

Gleichzeitig, während der Ermittlung der Solltrajektorie, wird in regelmäßigen zeitlichen Abständen eine Notbetriebssolltrajektorie ermittelt, die ebenfalls anhand der mittels der erfassten Bilddaten detektierten Umgebungssituation unter Berücksichtigung des erfassten Spurverlaufs unter Berücksichtigung von Spurinformationen aus der digitalen Karte in dem fahrzeugfesten Koordinatensystem erstellt wird.

Die Notbetriebssolltrajektorie umfasst eine Beschreibung eines Notfallpfades, entlang dem das Fahrzeug 1 bei einem Ausfall des Hauptsteuergerätes 2 und/oder einem anderen fahrzeugseitigen Fehlerfall, beispielsweise einem Ausfall von Erfassungseinheiten der Umgebungssensorik 3, im aktivierten Notbetriebsmodus in eine sichere Halteposition, die auch als sichere Stillstandsposition bezeichnet wird, überführt wird. Diese sichere Halteposition befindet sich beispielsweise am Fahrspurrand der rechten Fahrspur F1 oder auf einem gegebenenfalls vorhandenen Standstreifen.

Zudem umfasst die Notbetriebssolltrajektorie eine Beschreibung eines Verlaufes einer Geschwindigkeit oder Beschleunigung, mit welcher das Fahrzeug 1 entlang des Notfallpfades in die Halteposition, also in den Stillstand, geführt werden soll.

Die Notbetriebssolltrajektorie ist somit ein Datensatz, der eine Beschreibung des Notfallpfads enthält, auf dem das Fahrzeug bewegt werden soll, und eine Beschreibung der Dynamik enthält, mit der das Fahrzeug entlang des Notfallpfads bewegt werden soll.

Die in regelmäßig zeitlichen Abständen ermittelte Notbetriebssolltrajektorie und der dabei ermittelte Spurverlauf, insb. die ermittelten Spurmarkierungen S, werden einem Nebensteuergerät 5, beispielsweise einem Steuergerät einer Vorrichtung zur Fahrdynamikregelung, zugeführt und dort für eine spätere Verwendung im Notbetriebsmodus gespeichert. Im Nebensteuergerät 5 liegt somit eine Beschreibung eines Verlaufes des Notfallpfades relativ zu den Spurmarkierungen S vor, wobei Daten der Notbetriebssolltrajektorie und des Spurverlaufs durch die regelmäßige Ermittlung und Speicherung der Notbetriebssolltrajektorie und des Spurverlaufs regelmäßig aktualisiert werden.

Dieses Nebensteuergerät 5 als Redundanz zu dem Hauptsteuergerät 2 umfasst zur Fahrzeugquerführung im Notbetriebsmodus nur eine begrenzte Anzahl von Erfassungseinheiten. Im hochautomatisierten Fahrbetrieb stehen dem Nebensteuergerät 5 erfasste Bilddaten der Fahrzeugkamera 4 mit einer Spurerkennung und Koppelnavigationsdaten zur Verfügung. Anhand der Bilddaten ermittelte Spurinformationen, insbesondere die die rechte Fahrspur F1 begrenzenden Spurmarkierungen S, sind üblicherweise korrekt, wobei die Bilddaten in Bezug auf die Spurmarkierungen S in vergleichsweise komplexen Szenarien fehlerhafte Ergebnisse liefern können.

Um derartige fehlerhafte Ergebnisse identifizieren und korrigieren zu können, ist ein im Folgenden beschriebenes Verfahren vorgesehen.

Bei einem Ausfall des Hauptsteuergerätes 2 und/oder einem anderen den regulären Betriebsmodus des automatisierten Fahrbetriebes einschränkenden Fehlerfall wird vom regulären Betriebsmodus in den Notbetriebsmodus gewechselt.

Bei einem Wechsel in den Notbetriebsmodus übernimmt das Nebensteuergerätes 5 die Steuerung des Fahrzeuges 1 und führt das Fahrzeug durch eine Trajektorienregelung basierend auf der gespeicherten Notbetriebssolltrajektorie in die sichere Halteposition.

Im Notbetriebsmodus werden die Spurmarkierungen S anhand der erfassten Bilddaten der Fahrzeugkamera 4 fortlaufend ermittelt, um fortlaufend den Spurverlauf der Fahrspur F1 zu ermitteln. Der fortlaufend ermittelte Spurverlauf, d.h. der aktuell ermittelte Spurverlauf, wird mit dem gespeicherten Spurverlauf verglichen. Insbesondere wird dabei eine Abweichung zwischen einem Koordinatensystem des gespeicherten Spurverlaufs und einem Koordinatensystem des ermittelten Spurmarkierungen S ermittelt und korrigiert.

Die Korrektur erfolgt dadurch, dass das Koordinatensystem des gespeicherten Spurverlaufs soweit verdreht und verschoben wird, bis der gespeicherte Spurverlauf mit dem aktuell ermittelten Spurverlauf übereinstimmt. Mittels einer derart durchgeführten Korrektur der Koordinaten wird auch ein Verlauf des Notfallpfades korrigiert.

Insbesondere wird zur Ermittlung der Abweichung zwischen dem gespeicherten und aktuell ermittelten Spurverlauf ein Abstand x vorgegeben, so dass die Abweichung des gespeicherten 'Spurverlaufs mit dem aktuell ermittelten Spurverlauf an einer Position in dem vorgegebenen Abstand x vor dem Fahrzeug 1 ermittelt wird. Dabei wird der Abstand x insbesondere geschwindigkeitsabhängig vorgegeben, wobei der Abstand x bei höherer Geschwindigkeit des Fahrzeuges 1 größer ist, als bei geringerer Geschwindigkeit.

In dem Abstand x zu dem Fahrzeug 1 wird vor dem Fahrzeug 1 ermittelt, wie groß die Abweichung zwischen dem gespeicherten Spurverlauf und dem aktuell ermitteltem Spurverlauf ist.

Wird in einem nächsten Schritt des Verfahrens ermittelt, dass diese Abweichung einen vorgegebenen Wert in Metern unterschreitet, wird der aktuell ermittelte Spurverlauf als plausibel bewertet und zur Korrektur der gespeicherten Notfallsolltrajektorie herangezogen und die Trajektorienregelung wird gemäß der korrigierten Notbetriebssolltrajektorie durchgeführt.

Wird hingegen ermittelt, dass die Abweichung zwischen dem gespeicherten Spurverlauf und dem aktuell ermittelten Spurverlauf den vorgegebenen Wert in Metern überschreitet, wird der aktuell ermittelte Spurverlauf als unplausibel bewertet und es wird keine Korrektur der Notbetriebssolltrajektorie vorgenommen. Die gespeicherte Notfallsolltrajektorie wird dann unverändert der Trajektorienregelung zugrunde gelegt.

## Patentansprüche

1. Verfahren zum Betrieb eines Fahrzeuges (1) in einem automatisierten Fahrbetrieb, wobei das Fahrzeug in einem regulären Betriebsmodus des automatisierten Fahrbetriebs mittels eines Hauptsteuergeräts (2) automatisiert zu einer Zielposition geführt wird und in einem Notbetriebsmodus des automatisierten Fahrbetriebs mittels eines Nebensteuergeräts (5) automatisiert entlang einer Notbetriebssolltrajektorie in eine sichere Halteposition geführt wird, wobei die Notbetriebssolltrajektorie im regulären Betriebsmodus mittels des Hauptsteuergeräts (2) fortlaufend ermittelt wird und zusammen mit einem anhand von Spurmarkierungen (S) fortlaufend erfassten vorausliegenden Spurverlauf einer Fahrspur (F1) des Fahrzeugs (1) im Nebensteuergerät (4) gespeichert wird, und wobei im Notbetriebsmodus eine Korrektur der gespeicherten Notbetriebssolltrajektorie basierend auf dem gespeicherten Spurverlauf und einem im Notbetriebsmodus fortlaufend ermittelten Spurverlauf der Fahrspur (F1) des Fahrzeugs (1) vorgenommen wird,
wobei im Notbetriebsmodus
- eine Abweichung zwischen dem gespeicherten Spurverlauf und dem fortlaufend ermittelten Spurverlauf ermittelt wird,
**dadurch gekennzeichnet, dass**
- in Abhängigkeit der ermittelten Abweichung bewertet wird, ob der fortlaufend ermittelte Spurverlauf plausibel ist, und
- die Korrektur der gespeicherten Notbetriebssolltrajektorie basierend auf dem gespeicherten Spurverlauf und dem fortlaufend ermittelten Spurverlauf nur dann vorgenommen wird, wenn der fortlaufend ermittelte Spurverlauf als plausibel bewertet worden ist.

2. Verfahren nach Anspruch 1,
**dadurch gekennzeichnet, dass**
im Notbetriebsmodus der fortlaufend ermittelte Spurverlauf als plausibel bewertet wird, wenn die ermittelte Abweichung einen vorgegebenen Wert unterschreitet.

3. Verfahren nach Anspruch 1 oder 2,
**dadurch gekennzeichnet, dass**
die ermittelte Abweichung eine Abweichung zwischen dem gespeicherten Spurverlauf und dem fortlaufend ermittelten Spurverlauf ist, die sich in einem vorgegebenen Abstand (x) vor dem Fahrzeug (1) ergibt.

4. Verfahren nach Anspruch 3,
**dadurch gekennzeichnet, dass**
der Abstand (x) geschwindigkeitsabhängig vorgegeben wird.

5. Verfahren nach einem der vorhergehenden Ansprüche,
**dadurch gekennzeichnet, dass**
die Korrektur der gespeicherten Notbetriebssolltrajektorie durch einen Abgleich des gespeicherten Spurverlaufs mit dem fortlaufend ermittelten Spurverlauf erfolgt.

6. Verfahren nach Anspruch 5,
**dadurch gekennzeichnet, dass**
zum Abgleichen des gespeicherten Spurverlaufs mit dem fortlaufend ermittelten Spurverlauf ermittelt wird, welche Koordinatentransformation auf den gespeicherten Spurverlauf anzuwenden ist, um den gespeicherten Spurverlauf an den fortlaufend ermittelten Spurverlauf anzupassen.

7. Verfahren nach Anspruch 6,
**dadurch gekennzeichnet**, das
zur Korrektur der gespeicherten Notbetriebssolltrajektorie die ermittelte Koordinatentransformation auf die gespeicherte Notbetriebssolltrajektorie angewendet wird.

8. Verfahren nach einem der vorhergehenden Ansprüche,
**dadurch gekennzeichnet, dass**
das Fahrzeug (1) im Notbetriebsmodus mittels Koppelnavigation lokalisiert wird, wenn Spurmarkierungen (S) zur Ermittlung des Spurverlaufs nicht erfasst werden oder wenn der fortlaufend ermittelte Spurverlauf als nicht plausibel bewertet worden ist.

9. Verfahren nach einem der vorhergehenden Ansprüche,
**dadurch gekennzeichnet, dass**
die Spurmarkierungen (S) anhand von Bilddaten fortlaufend ermittelt werden.

## Claims

1. Method for operating a vehicle (1) in an automated driving operation, wherein the vehicle is guided in an automated manner to a target position by means of a main control unit (2) in a regular operating mode of the automated driving operation, and is guided in an automated manner along an emergency operation target trajectory into a safe stopping position by means of a secondary control unit (5) in an emergency operating mode of the automated driving operation, wherein the emergency operation target trajectory is continuously determined in the regular operating mode by means of the main control unit (2), and is stored in an auxiliary control unit (4) together with a lane course of a lane (F1) ahead of the vehicle (1), which lane course is continuously detected using lane markings (S), and wherein, in the emergency operating mode, a correction of the stored emergency operation target trajectory is carried out based on the stored lane course and a lane course of the lane (F1) of the vehicle (1) that is continuously determined in the emergency operating mode, wherein
- a deviation between the stored lane course and the continuously determined lane course is continuously detected in the emergency operating mode,
**characterized in that**
- depending on the determined deviation, it is assessed whether the continuously determined lane course is plausible, and
- the correction of the stored emergency operation target trajectory based on the stored lane course and the continuously determined lane course is only carried out if the continuously determined lane course has been assessed as plausible.

2. Method according to claim 1,
**characterized in that,**
in the emergency operation mode, the continuously determined lane course is assessed as plausible if the determined deviation falls below a specified value.

3. Method according to either claim 1 or claim 2,
**characterized in that**
the determined deviation is a deviation between the stored lane course and the continuously determined lane course, which occurs at a specified distance (x) in front of the vehicle (1).

4. Method according to claim 3,
**characterized in that**
the distance (x) is specified on the basis of the speed.

5. Method according to any of the preceding claims,
**characterized in that**
the stored emergency operation target trajectory is corrected by comparing the stored lane course with the continuously determined lane course.

6. Method according to claim 5,
**characterized in that,**
in order to compare the stored lane course with the continuously determined lane course, it is determined which coordinate transformation is to be applied to the stored lane course in order to adapt the stored lane course to the continuously determined lane course.

7. Method according to claim 6,
**characterized in that,**
in order to correct the stored emergency operation target trajectory, the determined coordinate transformation is applied to the stored emergency operation target trajectory.

8. Method according to any of the preceding claims,
**characterized in that**
the vehicle (1) is located in the emergency operating mode by means of dead reckoning if lane markings (S) for determining the lane course are not detected or if the continuously determined lane course has been assessed as implausible.

9. Method according to any of the preceding claims,
**characterized in that**
the lane markings (S) are continuously determined based on image data.

## Revendications

1. Procédé permettant de faire fonctionner un véhicule (1) dans un fonctionnement de conduite automatisé, dans lequel le véhicule est guidé de manière automatisée vers une position cible dans un mode de fonctionnement régulier du fonctionnement de conduite automatisé au moyen d'un appareil de commande principal (2) et est guidé de manière automatisée dans une position d'arrêt sûre le long d'une trajectoire de consigne de fonctionnement de secours dans un mode de fonctionnement de secours du fonctionnement de conduite automatisé au moyen d'un appareil de commande secondaire (5), dans lequel la trajectoire de consigne de fonctionnement de secours est déterminée en continu dans le mode de fonctionnement régulier au moyen de l'appareil de commande principal (2) et est mémorisée dans l'appareil de commande secondaire (4) conjointement avec un tracé de voie précédent d'une voie de circulation (F1) du véhicule (1), lequel tracé de voie est saisi en continu à l'aide de marquages de voie (S), et dans lequel, en mode de fonctionnement de secours, une correction de la trajectoire de consigne de fonctionnement de secours mémorisée est effectuée sur la base du tracé de voie mémorisé et d'un tracé de voie de la voie de circulation (F1) du véhicule (1), lequel tracé de voie est déterminé en continu en mode de fonctionnement de secours, dans lequel, en mode de fonctionnement de secours
- un écart est déterminé entre le tracé de voie mémorisé et le tracé de voie déterminé en continu,
**caractérisé en ce que**
- en fonction de l'écart déterminé, on évalue si le tracé de voie déterminé en continu est plausible ou non, et
- la correction de la trajectoire de consigne de fonctionnement de secours mémorisée est effectuée sur la base du tracé de voie mémorisé et du tracé de voie déterminé en continu uniquement si le tracé de voie déterminé en continu a été évalué comme plausible.

2. Procédé selon la revendication 1,
**caractérisé en ce que**
en mode de fonctionnement de secours, le tracé de voie déterminé en continu est évalué comme plausible si l'écart déterminé n'atteint pas une valeur prédéfinie.

3. Procédé selon la revendication 1 ou 2,
**caractérisé en ce que**
l'écart déterminé est un écart entre le tracé de voie mémorisé et le tracé de voie déterminé en continu, lequel écart est obtenu à une distance (x) prédéfinie devant le véhicule (1).

4. Procédé selon la revendication 3,
**caractérisé en ce que**
la distance (x) est prédéfinie en fonction de la vitesse.

5. Procédé selon l'une des revendications précédentes,
**caractérisé en ce que**
la correction de la trajectoire de consigne de fonctionnement de secours mémorisée a lieu par une comparaison du tracé de voie mémorisé avec le tracé de voie déterminé en continu.

6. Procédé selon la revendication 5,
**caractérisé en ce que**
pour la comparaison du tracé de voie mémorisé avec le tracé de voie déterminé en continu, on détermine quelle transformation de coordonnées doit être appliquée au tracé de voie mémorisé afin d'adapter le tracé de voie mémorisé au tracé de voie déterminé en continu.

7. Procédé selon la revendication 6,
**caractérisé en ce que**
pour la correction de la trajectoire de consigne de fonctionnement de secours mémorisée, la transformation de coordonnées déterminée est appliquée à la trajectoire de consigne de fonctionnement de secours mémorisée.

8. Procédé selon l'une des revendications précédentes,
**caractérisé en ce que**
le véhicule (1) est localisé en mode de fonctionnement de secours au moyen d'une navigation à l'estime lorsque des marquages de voie (S) ne sont pas détectés pour la détermination du tracé de voie ou lorsque le tracé de voie déterminé en continu n'a pas été évalué comme plausible.

9. Procédé selon l'une des revendications précédentes,
**caractérisé en ce que**
les marqueurs de voie (S) sont déterminés en continu à l'aide de données d'image.
